# FASCICULE DE BREVET EUROPEEN

(11) **EP 3 122 703 B1**
(45) Date de publication et mention de la délivrance du brevet: **15.05.2019**
(21) Numéro de dépôt: 15722657.2
(22) Date de dépôt: 27.03.2015
(51) Int. Cl.: C04B 38/06, C04B 28/00, C04B 12/00

(54) **PROCÉDÉ DE PRÉPARATION D'UN GÉOPOLYMÈRE MACROPOREUX ET MÉSOPOREUX, À POROSITÉ CONTRÔLÉE**
VERFAHREN ZUR HERSTELLUNG EINES MAKROPORÖSEN UND MESOPORÖSEN GEOPOLYMERS MIT KONTROLLIERTER POROSITÄT
METHOD FOR PRODUCING A MACROPOROUS AND MESOPOROUS GEOPOLYMER, WITH CONTROLLED POROSITY

(30) Priorité: 27.03.2014 FR 1452633
(43) Date de publication de la demande: 01.02.2017
(73) Titulaire: Commissariat à l'Énergie Atomique et aux Énergies Alternatives, 75015 Paris (FR)
(72) Inventeur: LAMBERTIN, David, F-84860 Caderousse (FR); POULESQUEN, Arnaud, F-30133 Les Angles (FR); FRIZON, Fabien, F-30400 Villeneuve Lez Avignon (FR); ROOSES, Adrien, F-92260 Fontenay-Aux-Roses (FR); GOETTMANN, Frédéric, F-84350 Courthezon (FR)
(74) Mandataire: Brevalex
(86) Numéro de dépôt international: PCT/EP2015/056712
(87) Numéro de publication internationale: WO 2015/144882

(56) Documents cités:
- EP-A1- 0 692 452
- WO-A1-2010/121886
- WO-A1-2011/106815
- WO-A1-2011/110965
- WO-A2-2011/068830
- WO-A2-2013/044016
- FR-A1- 2 922 543
- SINDHUNATA J S J VAN DEVENTER ET AL: "Effect of Curing Temperature and Silicate Concentration on Fly-Ash-Based Geopolymerisation", INDUSTRIAL & ENGINEERING CHEMISTRY RESEARCH, AMERICAN CHEMICAL SOCIETY, US, vol. 45, 1 janvier 2006 (2006-01-01), pages 3559-3568, XP002482729, ISSN: 0888-5885, DOI: 10.1021/IE051251P [extrait le 2006-04-14]

## Description

### DOMAINE TECHNIQUE

La présente invention appartient au domaine des géopolymères poreux utiles pour de nombreuses applications telles que la catalyse, la décontamination, l'extraction liquide-solide, la détection chimique, les isolants thermiques et les matériaux de construction.

Plus particulièrement, la présente invention propose un procédé permettant de préparer un géopolymère et notamment un géopolymère présentant une porosité macroporeuse et une porosité mésoporeuse contrôlées en utilisant un liquide organique comme matrice ou template.

### ÉTAT DE LA TECHNIQUE ANTÉRIEURE

L'extraction liquide-solide est basée sur le même principe que l'extraction liquide-liquide à ceci près que les molécules qui captent les solutés sont greffées ou adsorbées sur une phase solide. Les principaux supports solides utilisés actuellement sont les résines échangeuses d'ions et les supports inorganiques tels que les silices, l'alumine, les oxydes de titane ou de zirconium.

Ces deux types de support sont très largement employés à l'échelle industrielle, mais présentent quelques inconvénients.

En effet, les résines échangeuses d'ions présentent des problèmes de réactivité (explosion) lorsqu'elles sont employées en présence d'acide nitrique **[1]**. Par ailleurs, lorsqu'elles sont utilisées pour piéger des éléments radioactifs, elles peuvent se dégrader rapidement sous l'effet de la radiolyse **[2].** Enfin pour une utilisation en lit fluidisé, leur faible densité pose problème.

De même, les supports inorganiques sous forme de poudre présentent souvent des tailles de grains trop faibles pour pouvoir être mis en oeuvre dans un procédé de séparation en colonne notamment à cause d'une perte de charge trop importante. De plus, de tels supports présentent des surfaces d'échange certes importantes mais parfois peu accessibles.

Ces problèmes pourraient se trouver grandement améliorés si le matériau employé présentait une porosité bimodale, à savoir une macroporosité assurant un transfert de charge satisfaisant et une mésoporosité supportée à la surface de la macroporosité assurant l'accès à une grande surface spécifique et donc un taux de charge en molécules extractantes suffisant.

Dans le cadre du développement de matériaux poreux inorganiques non seulement pour des applications de filtration mais également pour des applications de catalyse, d'isolant thermique et d'absorbants, les mousses de géopolymère sont largement étudiées.

Le principe de préparation de mousse géopolymère est basé sur l'incorporation de fumée de silice contenant du silicium métallique ou d'aluminium métallique dans le géopolymère frais provoquant un dégagement d'hydrogène gazeux et la formation d'un réseau poreux **[3-5].** L'influence de la quantité d'eau et de silice a été étudiée et des matériaux présentant des porosités totales de 34 à 37% et des pores de 0,03 à 98 µm ont été réalisés **[4].**

Des études ont été réalisées récemment afin d'améliorer le réseau poreux formé par la production d'hydrogène, en y incorporant des tensio-actifs sous agitation mécanique permettant l'incorporation d'air et la stabilisation des gaz dans le géopolymère frais **[6]**. Il a été montré que l'augmentation de la quantité de tensio-actifs permettait d'augmenter la porosité du matériau. Des matériaux avec 80% de porosité totale et 60% de porosité ouverte présentant des tailles de pores de 200 à 500 µm ont été obtenus par cette méthode **[6]**.

La demande internationale WO 2011/068830 propose un procédé de préparation d'un géopolymère poreux. Dans l'exemple 10 de cette demande, une résine géopolymérique est préparée en ajoutant du métakaolin à une solution d'activation obtenue par mélange de KOH, de fumée de silice et d'eau. De l'huile de canola est ajoutée à cette résine géopolymérique. Après durcissement du mélange, l'huile de canola est éliminée par extraction via du n-butanol fluide, moyennant quoi un géopolymère macroporeux et mésoporeux est obtenu.

Cependant, aucune de ces synthèses ne permet d'obtenir un géopolymère présentant une porosité macroporeuse et une porosité mésoporeuse contrôlées. Les inventeurs se sont donc fixé pour but de proposer un procédé permettant de préparer un géopolymère macroporeux et mésoporeux dont la porosité peut être contrôlée, facile à mettre en oeuvre et économique pour une application industrielle quant à la préparation d'un matériau utile notamment pour l'extraction liquide-solide.

### EXPOSÉ DE L'INVENTION

La présente invention permet de résoudre des problèmes techniques et inconvénients précédemment listés des matériaux et procédés de l'art antérieur. En effet, les inventeurs ont mis au point un protocole permettant de préparer un géopolymère présentant une porosité macroporeuse et une porosité mésoporeuse avec un nombre d'étapes et un coût raisonnables permettant d'envisager une application industrielle pour un tel protocole.

La présente invention consiste en la réalisation d'un matériau poreux de géopolymère et notamment de type mousse de géopolymère à partir de l'immobilisation d'un liquide organique dans un matériau géopolymère suivie d'un traitement apte à libérer la porosité du matériau géopolymère.

En effet, les inventeurs ont montré que le pH très basique de la solution d'activation dans laquelle est éventuellement ajoutée une source alumino-silicatée permet non seulement de maintenir une seule phase avec la phase organique (i.e. le liquide organique), mais aussi d'obtenir un bloc de géopolymère uniforme, éventuellement après l'ajout d'une source alumino-silicatée et une fois le processus de géopolymérisation effectué.

La présente invention consiste donc en une immobilisation directe d'un liquide organique dans un matériau géopolymère dans laquelle le matériau obtenu ne présente pas de défaut de structure et dans laquelle aucun phénomène de lixiviation n'existe. Il convient de noter que, dans la présente invention, le liquide organique change d'état puisqu'il passe d'un état liquide à un état solide du type géopolymère dans lequel le liquide organique est encapsulé voire micro-encapsulé.

D'une part, le matériau de type matrice géopolymère dans lequel est incorporé le liquide organique est facile à préparer et, d'autre part, l'étape consistant à éliminer le liquide organique de ce matériau est également facile à mettre en oeuvre. Ainsi, le géopolymère mésoporeux et macroporeux est donc facile à préparer, facile à manipuler et prêt à l'emploi.

Ainsi, la présente invention concerne un procédé pour préparer un géopolymère macroporeux et mésoporeux comprenant les étapes successives consistant à :
1) préparer un matériau composite comprenant une matrice géopolymère et un liquide organique ; puis
2) éliminer ledit liquide organique par un traitement choisi dans le groupe constitué par un traitement thermique, un traitement oxydatif, un traitement photo-dégradatif et une extraction via un fluide supercritique ou des ultrasons,
ladite étape (1) comprenant les sous-étapes suivantes :
a) préparer une solution d'activation comprenant ledit liquide organique, un ou des tensioactif(s) ayant été ajouté(s) audit liquide organique préalablement à son ajout dans ladite solution d'activation,
b) ajouter à la solution obtenue à l'étape (a) au moins une source alumino-silicatée,
c) soumettre le mélange obtenu à l'étape (b) à des conditions permettant le durcissement du géopolymère.

Le matériau préparé lors de l'étape (1) est un matériau composite. Par « matériau composite », on entend, dans le cadre de la présente invention, un assemblage d'une matrice géopolymère et d'un liquide organique. Cet assemblage peut se présenter sous forme d'une encapsulation du liquide organique par la matrice géopolymère, d'une micro-encapsulation du liquide organique par la matrice géopolymère et/ou d'un enrobage du liquide organique par la matrice géopolymère.

Plus particulièrement, le matériau composite préparé dans le cadre de l'invention se présente sous forme d'un géopolymère (ou matrice géopolymère) dans lequel(laquelle) des billes de liquide organique et notamment des microbilles et/ou des nanobilles de liquide organique sont enrobées. Par « microbille », on entend une gouttelette de liquide organique dont le diamètre moyen est compris entre 1 et 1000 µm, notamment entre 5 et 900 µm et, en particulier entre 20 et 800 µm. Par « nanobille », on entend une gouttelette de liquide organique dont le diamètre moyen est compris entre 1 et 1000 nm, notamment entre 10 et 900 nm et, en particulier entre 20 et 800 nm. Les microbilles et les nanobilles de liquide organique présentes dans le matériau composite selon l'invention peuvent présenter des formes variées telles que des formes ovales, sphéroïdes ou polyhédriques. Ce sont ces nanobilles et microbilles qui participent, pour l'essentiel, au caractère macroporeux du géopolymère final i.e. obtenu après l'étape (2) du procédé selon l'invention donnant de fait des pores de formes variées telles que des formes ovales, sphéroïdes ou polyhédriques.

Avantageusement, le matériau composite préparé lors de l'étape (1) du procédé selon la présente invention ne contient que des microbilles et/ou des nanobilles de liquide organique, une matrice géopolymère et un tensioactif.

Par « liquide organique », on entend, dans le cadre de la présente invention, un liquide comprenant un composé et/ou un solvant, ledit composé et ledit solvant présentant au moins un atome de carbone et notamment au moins deux atomes de carbone.

Avantageusement, le liquide organique mis en oeuvre dans le cadre de la présente invention est un liquide non miscible dans l'eau ou complètement soluble dans l'eau à une concentration inférieure ou égale à 2% en poids et ce, à 25°C et à pression atmosphérique.

Avantageusement encore, le liquide organique mis en oeuvre dans le cadre de la présente invention comprend au plus 50%, notamment au plus 40%, en particulier, au plus 30%, plus particulièrement, au plus 20% et, tout particulièrement, au plus 10% de triglycérides en masse par rapport à la masse totale sèche dudit liquide organique. Dans une variante particulière, le liquide organique ne comprend aucun triglycéride. Par « triglycéride », on entend un composé de formule H₂C(OR¹)-C(H)(OR²)-C(OR³)H₂ avec R¹, R² et R³, identiques ou différents, représentant un groupe de formule-C(=O)R avec R représentant un groupement carboné. Ce groupement carboné est notamment un groupement alkyle, linéaire, cyclique ou ramifié ; saturé ou insaturé ; de 1 à 40 atomes de carbone, avantageusement de 2 à 30 atomes de carbone ; éventuellement substitué et comprenant éventuellement au moins un hétéroatome choisi dans le groupe constitué par N, O, F, Cl, P, Si, Br et S.

En particulier, le liquide organique mis en oeuvre dans le cadre de la présente invention est un liquide organique insaponifiable. Par « liquide organique insaponifiable », on entend un liquide organique ne présentant aucun groupement fonctionnel ester susceptible d'être hydrolysé dans des conditions basiques. Dans cette forme de mise en oeuvre, le liquide organique ne comprend aucun triglycéride, aucun phospholipide et aucun glycolipide.

Ainsi, un liquide organique mis en oeuvre dans le cadre de la présente invention peut être un agent dégraissant ou une huile. Par « agent dégraissant », on entend un liquide apte à éliminer un résidu présent à la surface d'un support par mise en contact avec ce support. Par « huile », on entend un liquide non miscible dans l'eau ou complètement soluble dans l'eau à une concentration inférieure ou égale à 2% en poids et ce, à 25°C et à pression atmosphérique. Une telle huile est notamment minérale ou synthétique. Avantageusement, le liquide organique mis en oeuvre dans le cadre de la présente invention est ou comprend une huile isolante thermiquement. Par « huile isolante thermiquement », on entend une huile dont la conductivité thermique est comprise entre 0,1 et 0,2 W/(m.K) et notamment entre 0,1 et 0,17 W/(m.K).

En particulier, le liquide organique mis en oeuvre dans le cadre de la présente invention est ou comprend au moins un élément choisi dans le groupe constitué par une huile naphténique ; un hydrocarbure aliphatique ; un hydrocarbure de synthèse linéaire insaturé ; un hydrocarbure aromatique tel qu'un hydrocarbure aromatique de synthèse ; un hydrocarbure linéaire chloré ; un hydrocarbure aromatique chloré ; un hydrocarbure linéaire chloréfluoré ; un hydrocarbure aromatique éthylénique ; un solvant chloré ; un solvant oxygéné tel qu'un alcool, une cétone, un éther de glycol et un éther oxyde ; un phosphate d'alkyle ; un chlorure d'alkyle et un silicone liquide.

Plus particulièrement, le liquide organique mis en oeuvre dans le cadre de la présente invention est ou comprend au moins un élément choisi dans le groupe constitué par un liquide de scintillation commercial, de l'huile de moteur, une huile pour transformateur, du benzène, un alkylbenzène, un alkylnaphtalène, un alkylbiphényle, du toluène, du xylène, de l'éthylbenzène, du kérosène, de l'hexane, du cyclohexane, de l'octane, de l'éthylcyclohexane, du dodecane, de l'éicosane, du phénol, du dichlorométhane, du trichloroéthane, du dichlorobenzène, du trichloroéthylène, du perchloréthylène, un trichlorobenzène, un polychlorobiphényle, un trichlorotrifluoroéthane, un alkyldiaryléthylène, du 2-octanone, du 4-dodecanone, du phosphate de tributyle (TBP), du tétrahydrofurane (THF), de l'éther diéthylique, du polydiméthylsiloxane et du polydiphénylsiloxane.

Le liquide organique mis en oeuvre dans le cadre de la présente invention peut se présenter sous forme d'une solution, d'une émulsion, d'une micro-émulsion, d'une suspension ou d'une suspension colloïdale.

Par « géopolymère » ou « matrice géopolymère », on entend dans le cadre de la présente invention un matériau solide et poreux à l'état sec, obtenu suite au durcissement d'un mélange contenant des matériaux finement broyés (i.e. la source alumino-silicatée) et une solution saline (i.e. la solution d'activation), ledit mélange étant capable de faire prise et de durcir au cours du temps. Ce mélange peut également être désigné sous les termes « mélange géopolymérique » ou « composition géopolymérique ». Le durcissement du géopolymère est le résultat de la dissolution/polycondensation des matériaux finement broyés du mélange géopolymérique dans une solution saline telle qu'une solution saline de fort pH (i.e. la solution d'activation).

Plus particulièrement, un géopolymère ou matrice géopolymère est un polymère inorganique alumino-silicaté amorphe. Ledit polymère est obtenu à partir d'un matériau réactif contenant essentiellement de la silice et de l'aluminium (i.e. la source alumino-silicatée), activé par une solution fortement alcaline, le rapport massique solide/solution dans la formulation étant faible. La structure d'un géopolymère est composée d'un réseau Si-O-Al formé de tétraèdres de silicates (SiO₄) et d'aluminates (AlO₄) liés en leurs sommets par partage d'atomes d'oxygène. Au sein de ce réseau, se trouve(nt) un ou plusieurs cation(s) compensateur(s) de charge également appelé(s) cation(s) de compensation qui permettent de compenser la charge négative du complexe AlO₄⁻. Ledit ou lesdits cation(s) de compensation est(sont) avantageusement choisi(s) dans le groupe constitué par les métaux alcalins tels que le lithium (Li), le sodium (Na), le potassium (K), le rubidium (Rb) et le césium (Cs), les métaux alcalino-terreux tels que le magnésium (Mg), le calcium (Ca), le strontium (Sr) et le barium (Ba) et leurs mélanges.

Les expressions « matériau réactif contenant essentiellement de la silice et de l'aluminium » et « source alumino-silicatée » sont, dans la présente invention, similaires et utilisables de façon interchangeable.

Le matériau réactif contenant essentiellement de la silice et de l'aluminium utilisable pour préparer la matrice géopolymére mise en oeuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc... ; des minéraux d'alumino-silicates naturels calcinés tels que le métakaolin ; des verres synthétiques à base d'alumino-silicates purs ; du ciment alumineux ; de la ponce ; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse.

Les expressions « solution d'activation », « solution saline de fort pH » et « solution fortement alcaline » sont, dans la présente invention, similaires et utilisables de façon interchangeable.

Par «fortement alcaline» ou « de fort pH », on entend une solution dont le pH est supérieur à 9, notamment supérieur à 10, en particulier, supérieur à 11 et, plus particulièrement supérieur à 12. En d'autres termes, la solution d'activation présente une concentration en OH⁻ supérieure à 0,01 M, notamment supérieure à 0,1 M, en particulier supérieure à 1 M et, plus particulièrement, comprise entre 5 et 20 M.

La solution d'activation comprend le cation de compensation ou le mélange de cations de compensation sous forme d'une solution ionique ou d'un sel. Ainsi, la solution d'activation est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de cesium (CsOH) et leurs dérivés etc....

L'étape (1) du procédé selon la présente invention comprend les sous-étapes suivantes :
a) préparer une solution d'activation comprenant ledit liquide organique, un ou des tensioactif(s) ayant été ajouté(s) audit liquide organique préalablement à son ajout dans ladite solution d'activation,
b) ajouter à la solution obtenue à l'étape (a) au moins une source alumino-silicatée,
c) soumettre le mélange obtenu à l'étape (b) à des conditions permettant le durcissement du géopolymère.

Cette forme de mise en oeuvre est remarquable car elle permet de maîtriser la porosité finale du géopolymère obtenu et ce, dès la sous-étape (a).

La sous-étape (a) du procédé selon la présente invention consiste à ajouter à une solution d'activation telle que précédemment définie, préalablement préparée le liquide organique. La préparation préalable de la solution d'activation est une étape classique dans le domaine des géopolymères.

Comme précédemment expliqué, la solution d'activation peut éventuellement contenir un ou plusieurs composant(s) silicaté(s) notamment choisi(s) dans le groupe constitué par la silice, la silice colloïdale et la silice vitreuse. Lorsque la solution d'activation contient un ou plusieurs composant(s) silicaté(s), ce ou ces dernier(s) est(sont) présent(s) en une quantité comprise entre 100 mM et 10 M, notamment entre 500 mM et 8 M et, en particulier, entre 1 et 6 M dans la solution d'activation.

Le liquide organique est ajouté à la solution d'activation en une fois ou en plusieurs fois et voire au goutte à goutte. Une fois le liquide organique ajouté à la solution d'activation, la solution obtenue est mélangée en utilisant un malaxeur, un agitateur, un barreau magnétique, un bain à ultrasons ou un homogénéisateur. Le mélange/malaxage lors de la sous-étape (a) du procédé selon l'invention se fait à une vitesse relativement soutenue. Par « vitesse relativement soutenue », on entend, dans le cadre de la présente invention, une vitesse supérieure à 250tr/min, notamment supérieure ou égale à 350 tr/min. Une telle agitation permettant d'obtenir une solution uniforme notamment une solution homogène ou une solution du type micro-émulsion.

La sous-étape (a) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure à 6 h, notamment supérieure à 10 h, en particulier comprise entre 10 h et 48 h et, plus particulièrement, entre 12 h et 36 h.

A noter qu'il est nécessaire, lors de la sous-étape (a), d'utiliser au moins un tensioactif, i.e. une molécule comportant une partie lipophile (apolaire) et une partie hydrophile (polaire), et ce, de façon à obtenir une solution uniforme suite à la sous-étape (a) du procédé selon l'invention. En d'autres termes, un ou plusieurs tensioactif(s) peu(ven)t devoir être ajouté(s) pour augmenter la miscibilité ou la dispersion du liquide organique dans la solution d'activation.

Le ou les tensioactif(s) pourrai(en)t être ajouté(s) (α) à la solution d'activation préalablement à l'ajout du liquide organique, (β) au liquide organique préalablement à son ajout dans la solution d'activation ou (γ) à la solution d'activation dans laquelle le liquide organique a déjà été ajouté. Le mode de réalisation (β) mis en oeuvre dans la présente invention est avantageux par rapport aux modes de réalisation (α) et (γ) ne faisant pas partie de l'invention car l'ajout de mélange tensioactif + liquide organique permet de contrôler plus encore la taille des nanobilles et/des microbilles de liquide organique, i.e. la taille des micelles de tensioactif remplies de liquide organique, et donc la porosité du géopolymère obtenu.

Parmi les tensioactifs utilisables dans le cadre de la présente invention, on peut citer :
i) les tensioactifs anioniques dont la partie hydrophile est chargée négativement tels que les alkyle ou aryle sulfonates, sulfates, phosphates, ou sulfosuccinates associés à un contre ion comme un ion ammonium (NH⁴⁺), un ammonium quaternaire tel que tétrabutylammonium, et les cations alcalins tels que Na⁺, Li⁺ et K⁺. A titre de tensioactifs anioniques, il est, par exemple, possible d'utiliser le paratoluènesulfonate de tetraéthylammonium, le dodécylsulfate de sodium, le palmitate de sodium, le stéarate de sodium, le myristate de sodium, le di(2-éthylhexyl) sulfosuccinate de sodium, le méthylbenzène sulfonate et l'éthylbenzène sulfonate.
ii) les tensioactifs cationiques dont la partie hydrophile est chargée positivement, notamment choisis parmi les ammoniums quaternaires comportant au moins une chaîne aliphatique en C4-C22 associés à un contre ion anionique choisi notamment parmi les dérivés du bore tels que le tetrafluoroborate ou les ions halogénures tels que F⁻, Br⁻, I⁻ ou Cl⁻. A titre de tensioactifs cationiques, il est, par exemple, possible d'employer le chlorure tétrabutylammonium, le chlorure tetradécylammonium, le bromure de tetradécyltriméthyle ammonium (TTAB), les halogénures d'alkylpyridinium portant une chaîne aliphatique et les halogénures d'alkylammonium.
iii) les tensioactifs zwittérioniques qui sont des composés neutres possédant des charges électriques formelles d'une unité et de signe opposé, notamment choisis parmi les composés présentant une chaîne alkyle en C5-C20 substituée généralement par une fonction chargée négativement comme un sulfate ou un carboxylate et une fonction chargée positivement comme un ammonium. A titre de tensioactifs zwittérioniques, on peut citer le N,N diméthyldodécylammoniumbutanate de sodium, le diméthyldodécylammonium propanate de sodium et les acides aminés.
iv) les tensioactifs amphotères qui sont des composés se comportant à la fois comme un acide ou comme une base selon le milieu dans lequel ils sont placés. A titre de tensioactifs amphotères, il est possible d'utiliser le lauroamphodiacétate de disodium, les bétaïnes comme l'alkylamidopropylbétaïne ou la laurylhydroxysulfobétaïne.
v) les tensioactifs neutres (non-ioniques) dont les propriétés tensioactives, notamment l'hydrophilie, sont apportées par des groupements fonctionnels non chargés tels qu'un alcool, un éther, un ester ou encore un amide, contenant des hétéroatomes tels que l'azote ou l'oxygène ; en raison de la faible contribution hydrophile de ces fonctions, les composés tensioactifs non ioniques sont le plus souvent polyfonctionnels. A titre de tensioactifs non-ioniques, il est possible d'employer les polyéthers comme les tensioactifs polyéthoxylés tels que par exemple le lauryléther de polyéthylèneglycol (POE23 ou Brij ® 35), les polyols (tensioactifs dérivés de sucres) en particulier les alkylates de glucose tels que par exemple l'hexanate de glucose.

La quantité de tensioactif(s) utilisée dans le cadre de la présente invention dépendra grandement du liquide organique et de la solution d'activation utilisés dans le procédé. L'homme du métier saura déterminer la quantité adéquate au moyen d'essais de routine. A titre d'exemple, dans la solution d'activation contenant le liquide organique, le tensioactif est présent dans une proportion comprise entre 0,1 et 20 %, notamment entre 0,5 et 15 % et, en particulier, entre 1 et 10 % en volume par rapport au volume total de ladite solution.

La sous-étape (b) du procédé selon l'invention consiste à mettre en contact la solution d'activation comprenant le liquide organique et éventuellement un tensioactif et la source alumino-silicatée telle que précédemment définie.

La source alumino-silicatée peut être versée en une ou en plusieurs fois sur la solution d'activation contenant le liquide organique et éventuellement un tensioactif. Dans une forme de mise en oeuvre particulière de la sous-étape (b), la source alumino-silicatée peut être saupoudrée sur la solution d'activation contenant le liquide organique et éventuellement un tensioactif.

Avantageusement, la sous-étape (b) du procédé selon l'invention est mise en oeuvre dans un malaxeur dans lequel la solution d'activation contenant le liquide organique et éventuellement un tensioactif a été préalablement introduite. Tout malaxeur connu de l'homme du métier est utilisable dans le cadre de la présente invention. A titre d'exemples non limitatifs, on peut citer un mélangeur NAUTA®, un malaxeur HOBART® et un malaxeur HENSCHEL®.

La sous-étape (b) du procédé selon l'invention comprend donc un mélange ou malaxage de la solution d'activation contenant le liquide organique et éventuellement un tensioactif avec la source alumino-silicatée. Le mélange/malaxage lors de la sous-étape (b) du procédé selon l'invention se fait à une vitesse relativement lente. Par « vitesse relativement lente », on entend, dans le cadre de la présente invention, une vitesse de rotation du rotor du malaxeur inférieure ou égale à 250 tr/min, notamment supérieure ou égale à 50 tr/min et, en particulier, comprise entre 100 et 250 tr/min. A titre d'exemple non limitatif, dans le cas d'un malaxeur normalisé, la vitesse d'agitation est de 200 tr/min.

La sous-étape (b) du procédé selon l'invention est effectuée à une température comprise entre 10°C et 40°C, avantageusement entre 15°C et 30°C et, plus particulièrement, à température ambiante (i.e. 23°C ± 5°C) pendant une durée supérieure à 2 min, notamment comprise entre 4 min et 1 h et, en particulier comprise entre 5 min et 30 min.

L'homme du métier saura déterminer la quantité de source alumino-silicatée à utiliser dans le cadre de la présente invention en fonction de ses connaissances dans le domaine de la géopolymérisation ainsi que de la nature du liquide organique mis en oeuvre et de la quantité de liquide organique et de solution d'activation mise en oeuvre.

Avantageusement, dans le procédé selon la présente invention, le rapport massique solution activation/MK avec solution d'activation représentant la masse de solution d'activation contenant le liquide organique et éventuellement un tensioactif (exprimée en g) et MK représentant la masse de source alumino-silicatée (exprimée en g) utilisé est avantageusement compris entre 0,6 et 2 et notamment entre 1 et 1,5. A titre d'exemple particulier, le rapport solution activation/MK est de l'ordre de 1,28 (i.e. 1,28 ± 0,1). Un rapport solution d'activation/MK compris entre 1,2 et 1,4 permet de garantir une quantité et une taille des pores dans le géopolymère propices à l'encapsulation et notamment à la micro-encapsulation de liquide organique.

De plus, outre la source alumino-silicatée, du sable, un granulat et/ou des fines peu(ven)t être ajouté(es) à la solution d'activation lors de ladite étape (b) du procédé selon l'invention.

Par « granulat », on entend un matériau granulaire, naturel, artificiel ou recyclé dont la dimension moyenne des grains est avantageusement comprise entre 10 et 125 mm.

Les fines également appelées « fillers » ou « fines d'addition » est un produit sec, finement divisé, issu de la taille, du sciage ou du travail de roches naturelles, de granulats tels que précédemment définis et des pierres ornementales. Avantageusement, les fines présentent une dimension moyenne des grains notamment comprise entre 5 et 200 µm.

Le sable, le granulat et/ou les fines est(sont) ajouté(es) pour mieux réguler la hausse de température lors de la sous-étape (b) du procédé mais également pour optimiser les propriétés physiques et mécaniques du matériau composite obtenu.

Le sable éventuellement ajouté lors de la sous-étape (b) peut être un sable calcaire ou un sable siliceux. Avantageusement, il s'agit d'un sable siliceux qui permet d'atteindre les meilleurs résultats en ce qui concerne l'optimisation des propriétés physiques et mécaniques du matériau composite obtenu. Par « sable siliceux », on entend, dans le cadre de la présente invention, un sable constitué à plus de 90%, notamment à plus de 95%, en particulier à plus de 98% et, plus particulièrement, à plus de 99% de silice (SiO₂). Le sable siliceux mis en oeuvre dans la présente invention présente avantageusement une dimension moyenne des grains notamment inférieure à 10 mm, notamment inférieure à 7 mm et, en particulier, inférieure à 4 mm. A titre d'exemple particulier, on peut utiliser un sable siliceux présentant une dimension moyenne des grains comprise entre 0,2 et 2 mm.

Lorsque du sable est ajouté en plus de la source alumino-silicatée à la solution d'activation, le rapport massique entre sable et source alumino-silicatée est compris 2/1 et 1/2, notamment entre 1,5/1 et 1/1,5 et, en particulier, entre 1,2/1 et 1/1,2.

La sous-étape (c) du procédé selon l'invention consiste à soumettre le mélange obtenu à la sous-étape (b) à des conditions permettant le durcissement du mélange géopolymérique.

Toute technique connue de l'homme du métier pour faire durcir un mélange géopolymérique dans lequel est présent le liquide organique est utilisable lors de l'étape de durcissement du procédé.

Les conditions permettant le durcissement lors de la sous-étape (c) comprennent avantageusement une étape de cure éventuellement suivie d'une étape de séchage. L'étape de cure peut se faire à l'air libre, sous eau, dans des moules hermétiques divers, par humidification de l'atmosphère entourant le mélange géopolymérique ou par application d'un enduit imperméable sur ledit mélange. Cette étape de cure peut être mise en oeuvre sous une température comprise entre 10 et 80°C, notamment entre 20 et 60°C et, en particulier, entre 30 et 40°C et peut durer entre 1 et 40 jours, voire plus longtemps. Il est évident que la durée de la cure dépend des conditions mises en oeuvre lors de cette dernière et l'homme du métier saura déterminer la durée la plus adaptée, une fois les conditions définies et éventuellement par des tests de routine.

Lorsque l'étape de durcissement comprend une étape de séchage, en plus de l'étape de cure, ce séchage peut se faire à une température comprise entre 30 et 90°C, notamment entre 40 et 80°C et, en particulier, entre 50 et 70°C et peut durer entre 6 h et 10 jours, notamment entre 12 h et 5 jours et, en particulier, entre 24 et 60 h.

De plus, préalablement au durcissement du mélange géopolymérique dans lequel est présent le liquide organique, ce dernier peut être placé dans des moules de façon à lui conférer une forme prédéterminée suite à ce durcissement.

La description divulgue une 2^{nde} forme de mise en oeuvre ne faisant pas partie de l'invention dans laquelle l'étape (1) du procédé comprend les étapes suivantes :
a') ajouter à une solution d'activation au moins une source alumino-silicatée,
b') ajouter au mélange obtenu à l'étape (a') ledit liquide organique,
c') soumettre le mélange obtenu à l'étape (b') à des conditions permettant le durcissement du géopolymère.

La sous-étape (a') consiste à préparer une solution d'activation telle que précédemment définie dans laquelle est ajoutée au moins une source alumino-silicatée telle que précédemment définie. Une telle sous-étape est classique dans le domaine des géopolymères.

Tout ce qui a été précédemment décrit quant à la solution d'activation lors de la sous-étape (a) s'applique également à la solution d'activation mise en oeuvre lors de la sous-étape (a').

De même, tout ce qui a été précédemment décrit pour la sous-étape (b) et notamment les conditions du mélange/malaxage, le type de malaxeur, la température, la quantité de source alumino-silicatée et le rapport massique solution d'activation/MK s'applique, *mutatis mutandis,* à la sous-étape (a').

La sous-étape (b') consiste à introduire, dans le mélange (solution d'activation + source alumino-silicatée), le liquide organique. Il est évident que cette sous-étape doit être mise en oeuvre relativement rapidement après la préparation du mélange précité et ce, préalablement à un tout durcissement de ce mélange qui pourrait empêcher l'obtention d'un mélange homogène suite à la sous-étape (b').

Le liquide organique est ajouté au mélange (solution d'activation + source alumino-silicatée) en une fois ou en plusieurs fois et voire au goutte à goutte. Une fois le liquide organique ajouté au mélange (solution d'activation + source alumino-silicatée), la préparation obtenue est mélangée en utilisant un malaxeur, un agitateur, un barreau magnétique, un bain à ultrasons ou un homogénéisateur. Le mélange/malaxage lors de la sous-étape (b') se fait à une vitesse relativement soutenue telle que précédemment définie et ce, pour obtenir un mélange homogène suite à la sous-étape (b').

La sous-étape (b') est effectuée à une température comprise entre 10°C et 40°C, avantageusement entre 15°C et 30°C et, plus particulièrement, à température

La sous-étape (b') est effectuée à une température comprise entre 10°C et 40°C, avantageusement entre 15°C et 30°C et, plus particulièrement, à température ambiante (i.e. 23°C ± 5°C) pendant une durée supérieure à 6 h, notamment supérieure à 10 h, en particulier comprise entre 10 h et 48 h et, plus particulièrement, entre 12 h et 36 h.

Comme précédemment expliqué, il peut être nécessaire, lors de la sous-étape (b'), d'utiliser au moins un tensioactif tel que précédemment défini et ce, de façon à obtenir un mélange homogène suite à la sous-étape (b') du procédé selon l'invention. En d'autres termes, un ou plusieurs tensioactif(s) peu(ven)t devoir être ajouté(s) pour augmenter la miscibilité ou la dispersion du liquide organique dans le mélange (solution d'activation + source alumino-silicatée).

Le ou les tensioactif(s) peu(ven)t être ajouté(s) (a') au mélange (solution d'activation + source alumino-silicatée), (β') au liquide organique préalablement à son ajout dans le mélange (solution d'activation + source alumino-silicatée) ou (γ') au mélange (solution d'activation + source alumino-silicatée) dans lequel le liquide organique a déjà été ajouté. Le mode de réalisation (β') est préférable vis-à-vis du but recherché. Tout ce qui a été indiqué pour le tensioactif dans le cadre de la sous-étape (a) et notamment la quantité de tensioactif s'applique également à la sous-étape (b').

De plus, comme envisagé dans le cadre de la présente invention, du sable, un granulat et/ou des fines tel(les) que précédemment défini(es) peu(ven)t être utilisé(es) pour préparer le matériau composite obtenu suite à l'étape (1). Le sable, le granulat et/ou les fines peu(ven)t être ajouté(es) lors de la sous-étape (a'); suite à la sous-étape (a') et préalablement à la sous-étape (b') ; lors de la sous-étape (b') et/ou suite à la sous-étape (b') et préalablement à la sous-étape (c').

Enfin, tout ce qui a été décrit pour la sous-étape (c) s'applique également à la sous-étape (c').

Dans le matériau composite obtenu suite à l'étape (1) du procédé selon la présente invention, le liquide organique est incorporé dans la matrice géopolymère jusqu'à un taux d'incorporation de 90% en volume par rapport au volume total dudit matériau composite, notamment jusqu'à un taux d'incorporation de 80% en volume par rapport au volume total dudit matériau composite et typiquement à un taux d'incorporation compris entre 0,5 et 70% en volume par rapport au volume total dudit matériau composite. En d'autres termes, le liquide organique représente entre 0,5 et 70% en volume par rapport au volume total du matériau composite objet de l'invention ou matériau composite préparé selon le procédé objet de l'invention. Avantageusement, ce taux d'incorporation est compris entre 1 et 65%, notamment entre 5 et 60% et, en particulier, entre 10 et 55% en volume par rapport au volume total dudit matériau composite. A titre d'exemples particuliers, ce taux d'incorporation peut être de l'ordre de 20% (i.e. 20% ± 5%), de l'ordre de 30% (i.e. 30% ± 5%), de l'ordre de 40% (i.e. 40% ± 5%) ou de l'ordre de 50% (i.e. 50% ± 5%) en volume par rapport au volume total dudit matériau composite.

L'étape (2) du procédé selon la présente invention consiste à éliminer le liquide organique et libérer ainsi la porosité du matériau composite obtenu suite à l'étape (1). Il est évident que cette élimination entraîne également celle du ou des tensioactif(s) éventuellement utilisé(s) lors de la préparation dudit matériau composite.

Différentes variantes sont envisagées quant à cette élimination.

La 1^{ère} de ces variantes consiste en un traitement thermique. Par « traitement thermique », on entend, dans le cadre de la présente invention, le fait de soumettre le matériau composite de l'étape (1) à une haute température i.e. une température supérieure à 200°C, notamment comprise entre 300°C et 1000°C et, en particulier comprise entre 400°C et 800°C.

Ce traitement thermique est avantageusement réalisé sous oxygène, sous air, sous gaz inerte tel que l'argon ou sous gaz neutre tel que de l'azote et avantageusement sous oxygène ou sous air. Cette étape de traitement thermique consiste en une calcination ou en une sublimation des composés organiques que sont le liquide organique et les tensioactifs mis en oeuvre.

Cette étape présente une durée comprise entre 15 min et 12 h et, notamment entre 1 h et 6 h. Il est possible à l'homme du métier de faire varier les conditions du traitement thermique et ce, en fonction du matériau composite obtenu en fin d'étape (1) en vue d'obtenir un géopolymère poreux exempt de tout composé organique.

La 2^{nde} des variantes envisagées pour éliminer le liquide organique et éventuellement les tensioactifs utilisés consiste à oxyder ces éléments principalement en CO₂ et H₂O. Un tel traitement oxydatif est notamment soit un traitement par plasma, soit un traitement à l'ozone.

Le traitement par plasma consiste à exposer le matériau composite obtenu suite à l'étape (1) à un plasma. Pour rappel, le plasma est un gaz à l'état ionisé, classiquement considéré comme un quatrième état de la matière. On apporte l'énergie nécessaire à l'ionisation d'un gaz au moyen d'une onde électromagnétique (radio fréquence ou micro onde). Le plasma est composé de molécules neutres, d'ions, d'électrons, d'espèces radicalaires (chimiquement très actives) et d'espèces excitées qui vont réagir avec la surface des matériaux.

On distingue les plasmas dits « froids » et les plasmas dits « chauds » qui se distinguent les uns des autres vis-à-vis du taux d'ionisation des espèces contenues dans le plasma. Pour les plasmas dits « froids », le taux d'ionisation des espèces réactives est inférieur à 10⁻⁴ alors que pour les plasmas dits « chauds », il est supérieur à 10⁻⁴. Les termes « chauds » et « froids » viennent du fait que le plasma dit « chaud » est beaucoup plus énergétique que le plasma dit « froid ».

Le plasma est avantageusement généré par un mélange d'au moins deux gaz, le premier et le second gaz étant respectivement choisis dans le groupe constitué par les gaz inertes et le groupe constitué par l'air et l'oxygène. La durée du traitement par plasma est comprise entre 1 et 30 min, et notamment, entre 5 et 15 min.

Un traitement à l'ozone consiste à exposer le matériau composite obtenu suite à l'étape (1) à de l'ozone. Cette exposition peut impliquer soit la mise en contact de ce matériau composite avec un flux d'ozone, soit la disposition de ce dernier dans une atmosphère contenant de l'ozone.

L'ozone nécessaire peut être obtenue, à partir d'un gaz riche en oxygène tel que de l'air, de l'oxygène, de l'air enrichi en oxygène ou un gaz enrichi en oxygène, via un générateur d'ozone tel qu'un UVO-Cleaner Model 42-200 à lampe à vapeur de mercure basse pression (28 mW/cm², 254 nm). La durée du traitement à l'ozone peut être variable. A titre d'exemples non limitatifs, cette durée est avantageusement comprise entre 30 sec et 3 h, notamment entre 1 min et 1 h, en particulier, entre 5 min et 30 min et, plus particulièrement, de l'ordre de 10 min (10 min ± 3 min).

La 3^{ème} des variantes envisagées pour éliminer le liquide organique et éventuellement les tensioactifs utilisés est un traitement photo-dégradatif. Ce dernier consiste en une dégradation des composés organiques contenus dans le matériau composite obtenu suite à l'étape (1) au moyen d'une exposition à un rayonnement lumineux et notamment à une lumière UV.

Avantageusement, la lumière UV mise en oeuvre présente une longueur d'onde comprise entre 10 nm et 400 nm, notamment entre 100 nm et 380 nm et, en particulier, entre 180 nm et 360 nm. Toute source UV est utilisable pour générer une telle lumière UV. A titre d'exemple, on peut citer une lampe UV, une lampe à mercure à basse pression, une lampe à mercure à moyenne pression, une lampe à mercure à haute pression, une lampe à mercure à très haute pression, une lampe à arc électrique, une lampe aux halogénures, une lampe au xénon, un laser, un laser excimère ArF, un laser excimère KrF, une lampe excimère ou un rayonnement synchroton.

Le traitement aux UV dans le cadre de la présente invention peut être réalisé à une température comprise entre 5°C et 120°C, notamment entre 10°C et 80°C et, en particulier, entre 15°C et 40°C. Plus particulièrement, le traitement aux UV selon l'invention est réalisé à température ambiante. Le traitement aux UV dans le cadre de la présente invention dure de 1 min à 5 h, notamment de 5 min à 1 h et, en particulier, de 10 min à 45 min. L'irradiation peut être unique ou être répétée plusieurs fois, notamment de 2 à 20 fois et en particulier, de 3 à 10 fois.

Ce traitement aux UV est avantageusement effectué sous gaz et notamment en présence d'un gaz riche en oxygène et/ou en ozone tel que de l'air, de l'oxygène, de l'ozone, de l'air enrichi en oxygène et/ou en ozone ou un gaz enrichi en oxygène et/ou en ozone.

La dernière de ces variantes consiste en une extraction des composés organiques que sont le liquide organique et les tensioactifs mis en oeuvre par un fluide supercritique ou des ultrasons.

Dans ce qui précède et ce qui suit, l'expression « fluide supercritique » est utilisée dans son acceptation habituelle, à savoir qu'un « fluide supercritique » est un fluide chauffé à une température supérieure à sa température critique (température maximale en phase liquide, quelle que soit la pression ou température du point critique) et soumis à une pression supérieure à sa pression critique (pression du point critique), les propriétés physiques d'un tel fluide supercritique (densité, viscosité, diffusivité) étant intermédiaires entre celles des liquides et celles des gaz. L'étape (2) du procédé selon l'invention met à profit les propriétés remarquables de solubilité des composés organiques que présentent les fluides supercritiques.

Tout fluide supercritique connu de l'homme du métier et généralement utilisé dans les procédés d'extraction ou de solubilisation des matières organiques est utilisable dans le cadre de la présente invention. Avantageusement, le fluide supercritique utilisé dans le cadre de l'étape (2) du procédé selon la présente invention est choisi dans le groupe constitué par le dioxyde de carbone (CO₂) supercritique, le monoxyde d'azote (N₂O) supercritique, le Fréon-22 supercritique, le Fréon-23 supercritique, le méthanol supercritique, l'hexane supercritique et l'eau supercritique. Plus particulièrement, le fluide supercritique utilisé dans le cadre de l'étape (2) du procédé selon la présente invention est le CO₂ supercritique, sa température critique (31°C) et sa pression critique (74 bar) étant relativement faciles à atteindre.

Le traitement aux ultrasons peut être réalisé sur le matériau composite obtenu suite à l'étape (1) placé avec un solvant adapté dans un bac à ultrasons ou avec une sonde à ultrasons et ce pendant une durée comprise entre 5 min et 24 h et notamment entre 10 min et 12 h. A titre d'exemples, on peut utiliser un bac à ultrasons ou une sonde à ultrasons libérant une puissance comprise entre 200 W et 750 W et fonctionnant à une fréquence comprise entre 10 et 45 kHz.

Cette étape d'extraction réalisée aussi bien avec un fluide supercritique qu'avec des ultrasons présente une durée comprise entre 15 min et 12 h et, notamment entre 1 h et 6 h. Il est possible à l'homme du métier de faire varier le traitement via un fluide supercritique et ce, en fonction du matériau composite obtenu en fin d'étape (1) en vue d'obtenir un géopolymère poreux exempt de tout composé organique.

Une fois l'étape (2) du procédé selon l'invention mise en oeuvre, un géopolymère mésoporeux et macroporeux i.e. un géopolymère présentant à la fois des macropores et des mésopores est obtenu. Par « macropores », on entend des pores ou vides présentant un diamètre moyen supérieur à 50 nm et notamment supérieur à 70 nm. Par « mésopores », on entend des pores ou vides présentant un diamètre moyen compris entre 2 et 50 nm et notamment entre 2 et 20 nm. Dans ce géopolymère, les macropores sont, pour l'essentiel, issus des nanobilles et/ou microbilles de liquide organique, alors que les mésopores résultent principalement du procédé de géopolymérisation.

Le géopolymère obtenu suite au procédé selon la présente invention présente une porosité ouverte, une porosité ouverte pénétrante, une porosité connectée et une porosité fermée. De plus, dans certaines formes de mise en oeuvre, on peut parler de mousse de géopolymère et avantageusement pour des géopolymères présentant une porosité exprimée en volume par rapport au volume total du géopolymère supérieure à 30%, notamment supérieure à 40% et, en particulier, supérieure à 50%. Une telle mousse présente un intérêt dans les applications en constructions du fait de l'isolation thermique qu'elle propose puisqu'il est connu que l'augmentation du taux de porosité induit une diminution de la conductivité thermique.

D'autres caractéristiques apparaîtront encore à l'homme du métier à la lecture des exemples ci-dessous ne faisant pas partie de la présente invention, en référence aux figures annexées.

### BRÈVE DESCRIPTION DES DESSINS

La Figure 1 est une vue en microscopie électronique à balayage d'une mousse de géopolymère à 20% en liquide organique.
La Figure 2 est une vue en microscopie électronique à balayage d'une mousse de géopolymère à 40% en liquide organique.
La Figure 3 est une vue en microscopie électronique à balayage d'une mousse de géopolymère à 50% en liquide organique.
La Figure 4 présente la distribution des tailles de pores par porosimétrie Mercure de la mousse de géopolymère à 40% en liquide organique.

### EXPOSÉ DÉTAILLÉ DE MODES DE RÉALISATION PARTICULIERS NE FAISANT PAS PARTIE DE L'INVENTION

Des mousses de géopolymère ont été préparées à partir de composite "géopolymère + liquide organique (huile)" à 20, 40 et 50% en volume de liquide organique.

Les produits employés pour le géopolymère sont du métakaolin de Pieri Premix MK (Grade Construction Products), du NaOH (Prolabo, 98%), du silicate de sodium Betol 52T (Woellner) et de l'huile de moteur comme liquide (ou matrice ou template) organique. Les compositions sont reportées dans le Tableau 1 ci-après.

**Tableau 1 : Composition du mortier pour la micro encapsulation d'huile**

| % template (Vol.) | Composition liant (en g) |
|---|---|
| 20 | NaOH: 38,3 |
| | H₂O: 113,6 |
| | Betol 52 T: 393 |
| | Metakaolin: 374,7 |
| | Huile: 87,7 |
| 40 | NaOH: 34,5 |
| | H₂O: 102,2 |
| | Betol 52 T: 353,7 |
| | Metakaolin: 377,3 |
| | Huile: 210,5 |
| 50 | NaOH: 4,8 |
| | H₂O: 14,2 |
| | Betol 52 T: 49,1 |
| | Metakaolin: 46,8 |
| | Huile: 43,3 |

Après prise, les composites "géopolymère + liquide organique (huile)" sont mis dans une étuve à 400°C, pendant 2 h, sous air, afin de libérer la porosité du composite.

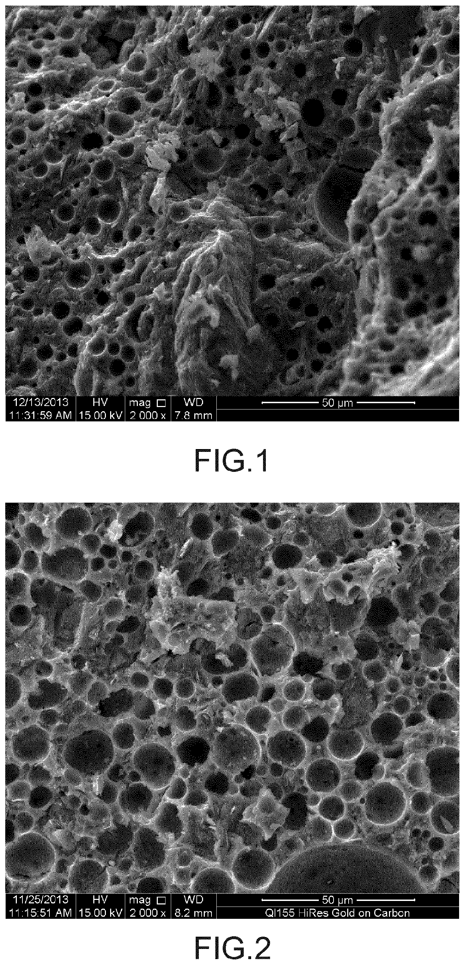

Sur les Figures 1, 2 et 3, sont reportés les clichés MEB des mousses de géopolymères après le traitement thermique à 400°C, il apparaît clairement un réseau poreux de plus en plus dense avec l'augmentation de la charge en Template dans le géopolymère. Les macropores ont une dimension de l'ordre de 10 µm.

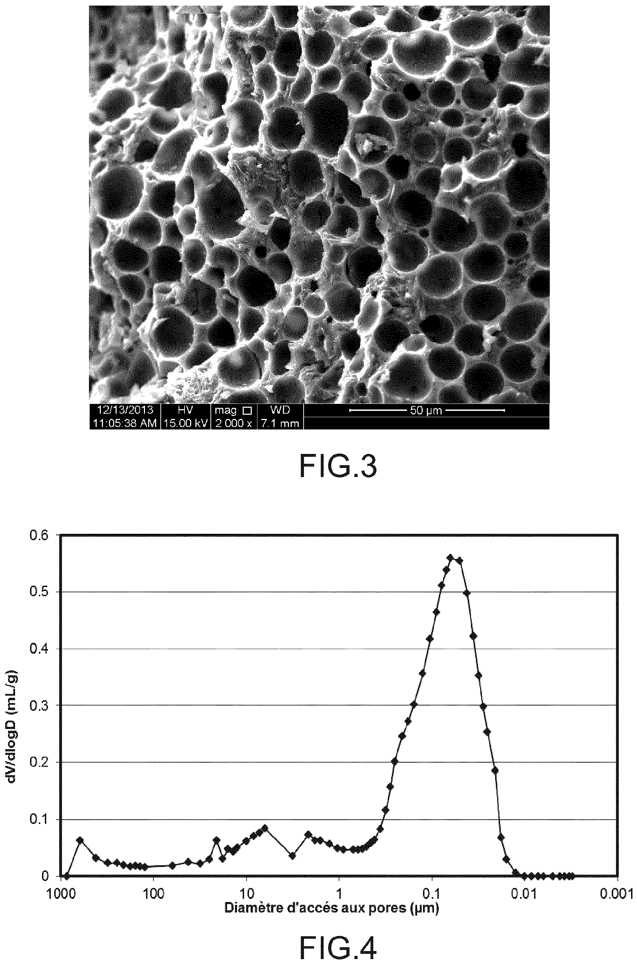

Une distribution de la taille des pores par porosimétrie Mercure a été réalisée sur la mousse de géopolymère à 40% en matrice organique, et il apparaît une double macroporosité située vers 1-10 µm et 0,1 µm (Figure 4).

### RÉFÉRENCES

**[1]** Calmon, 1980, « Explosion hazards of using nitric acid in ion-exchange equipment », Chemical Engineering, vol. 87, pages 271-274.
**[2]** Pillay, 1986, « A review of the radiation stability of ion exchange materials », Journal of Radioanalytical and Nuclear Chemistry, vol. 102, pages 247-268.
**[3]** Prud'homme et al, 2011, « In situ inorganic foams prepared from various clays at low temperature », Applied Clay Science, vol. 51, pages 15-22.
**[4]** Medri et al, 2013, « Effect of metallic Si addition on polymerization degree of in situ foamed alkali-aluminosilicates », Ceramics International, vol. 39, pages 7657-7668.
**[5]** Rickard et Van Riessen, 2013, « Performance of solid and cellular structured fly ash geopolymers exposed to a simulated fire », Cement and Concrete Composites.
**[6]** Strozi Cilla et al, 2014, « Geopolymer foams by gelcasting », Ceramics International, vol. 40, pages 5723-5730.

## Revendications

1. Procédé pour préparer un géopolymère macroporeux et mésoporeux comprenant les étapes successives consistant à :
1) préparer un matériau composite comprenant une matrice géopolymère et un liquide organique ; puis
2) éliminer ledit liquide organique par un traitement choisi dans le groupe constitué par un traitement thermique, un traitement oxydatif, un traitement photo-dégradatif et une extraction via un fluide supercritique ou des ultrasons,
**caractérisé en ce que** ladite étape (1) comprend les sous-étapes suivantes :
a) préparer une solution d'activation comprenant ledit liquide organique, un ou des tensioactif(s) ayant été ajouté(s) audit liquide organique préalablement à son ajout dans ladite solution d'activation,
b) ajouter à la solution obtenue à l'étape (a) au moins une source alumino-silicatée,
c) soumettre le mélange obtenu à l'étape (b) à des conditions permettant le durcissement du géopolymère.

2. Procédé selon la revendication 1, **caractérisé en ce que** le matériau composite préparé lors de ladite étape (1) se présente sous forme d'un géopolymère (ou matrice géopolymère) dans lequel(laquelle) des billes de liquide organique et notamment des microbilles et/ou des nanobilles de liquide organique sont enrobées.

3. Procédé selon la revendication 1 ou 2, **caractérisé en ce que** ledit liquide organique comprend au plus 50%, notamment au plus 40%, en particulier, au plus 30%, plus particulièrement, au plus 20% et, tout particulièrement, au plus 10% de triglycérides en masse par rapport à la masse totale sèche dudit liquide organique.

4. Procédé selon l'une quelconque des revendications 1 à 3, **caractérisé en ce que** ledit liquide organique est un liquide organique insaponifiable.

5. Procédé selon l'une quelconque des revendications 1 à 4, **caractérisé en ce que** ledit liquide organique est ou comprend une huile isolante thermiquement.

6. Procédé selon l'une quelconque des revendications 1 à 5, **caractérisé en ce que** ledit liquide organique est ou comprend au moins un élément choisi dans le groupe constitué par une huile naphténique ; un hydrocarbure aliphatique; un hydrocarbure de synthèse linéaire insaturé; un hydrocarbure aromatique tel qu'un hydrocarbure aromatique de synthèse ; un hydrocarbure linéaire chloré ; un hydrocarbure aromatique chloré; un hydrocarbure linéaire chloréfluoré ; un hydrocarbure aromatique éthylénique ; un solvant chloré ; un solvant oxygéné tel qu'un alcool, une cétone, un éther de glycol et un éther oxyde ; un phosphate d'alkyle ; un chlorure d'alkyle et un silicone liquide.

7. Procédé selon l'une quelconque des revendications 1 à 6, **caractérisé en ce que** ledit liquide organique est ou comprend au moins un élément choisi dans le groupe constitué par un liquide de scintillation commercial, de l'huile de moteur, une huile pour transformateur, du benzène, un alkylbenzène, un alkylnaphtalène, un alkylbiphényle, du toluène, du xylène, de l'éthylbenzène, du kérosène, de l'hexane, du cyclohexane, de l'octane, de l'éthylcyclohexane, du dodecane, de l'éicosane, du phénol, du dichlorométhane, du trichloroéthane, du dichlorobenzène, du trichloroéthylène, du perchloréthylène, un trichlorobenzène, un polychlorobiphényle, un trichlorotrifluoroéthane, un alkyldiaryléthylène, du 2-octanone, du 4-dodecanone, du phosphate de tributyle (TBP), du tétrahydrofurane (THF), de l'éther diéthylique, du polydiméthylsiloxane et du polydiphénylsiloxane.

8. Procédé l'une quelconque des revendications 1 à 7, **caractérisé en ce que**, outre la source alumino-silicatée, du sable, un granulat et/ou des fines est(sont) ajouté(es) à la solution d'activation lors de ladite sous-étape (b).

9. Procédé selon l'une quelconque des revendications précédentes, **caractérisé en ce que** ledit traitement thermique consiste à soumettre le matériau composite de l'étape (1) à une température supérieure à 200°C, notamment comprise entre 300°C et 1000°C et, en particulier comprise entre 400°C et 800°C.

10. Procédé selon l'une quelconque des revendications 1 à 8, **caractérisé en ce que** ledit traitement oxydatif est soit un traitement par plasma, soit un traitement à l'ozone.

11. Procédé selon l'une quelconque des revendications 1 à 8, **caractérisé en ce que** ledit fluide supercritique est choisi dans le groupe constitué par le dioxyde de carbone (CO₂) supercritique, le monoxyde d'azote (N₂O) supercritique, le Fréon-22 supercritique, le Fréon-23 supercritique, le méthanol supercritique, l'hexane supercritique et l'eau supercritique.

## Patentansprüche

1. Verfahren zum Herstellen eines makroporösen und mesoporösen Geopolymers, umfassend die aufeinanderfolgenden Schritte:
1) Herstellen eines Verbundmaterials mit einer Geopolymermatrix und einer organischen Flüssigkeit; dann
2) Entfernen der organischen Flüssigkeit durch eine Behandlung, ausgewählt aus der Gruppe umfassend Wärmebehandlung, Oxidationsbehandlung, Photodegradationsbehandlung und Extraktion über ein superkritisches Fluid oder Ultraschall,
**dadurch gekennzeichnet, dass** der Schritt (1) die nachstehenden Unterschritte umfasst:
a) Herstellen einer Aktivierungslösung, enthaltend die organische Flüssigkeit, wobei ein oder mehrere Tenside der organischen Flüssigkeit vor deren Hinzufügen in die Aktivierungslösung zugefügt wird/werden,
b) Hinzufügen von zumindest einer Aluminosilikatquelle zur in Schritt (a) erhaltenen Lösung,
c) Unterwerfen des in Schritt (b) erhaltenen Gemischs Bedingungen, die das Härten des Geopolymers gestatten.

2. Verfahren nach Anspruch 1, **dadurch gekennzeichnet, dass** das in Schritt (1) hergestellte Verbundmaterial in Form eines Geopolymers (oder einer Geopolymermatrix) vorliegt, in welches (welcher) Kügelchen organischer Flüssigkeit und insbesondere Mikrokügelchen und/oder Nanokügelchen organischer Flüssigkeit eingebettet sind.

3. Verfahren nach Anspruch 1 oder 2, **dadurch gekennzeichnet, dass** die organische Flüssigkeit höchstens 50 Masse-%, insbesondere höchstens 40 Masse-%, insbesondere höchstens 30 Masse-%, insbesondere höchstens 20 Masse-%, insbesondere höchstens 10 Masse-% Triglyceride bezogen auf die Gesamttrockenmasse der organischen Flüssigkeit enthält.

4. Verfahren nach einem der Ansprüche 1 bis 3, **dadurch gekennzeichnet, dass** die organische Flüssigkeit eine unverseifbare organische Flüssigkeit ist.

5. Verfahren nach einem der Ansprüche 1 bis 4, **dadurch gekennzeichnet, dass** die organische Flüssigkeit ein wärmeisolierendes Öl ist oder enthält.

6. Verfahren nach einem der Ansprüche 1 bis 5, **dadurch gekennzeichnet, dass** die organische Flüssigkeit zumindest ein Element ist oder enthält, ausgewählt aus der Gruppe umfassend naphthenisches Öl; aliphatischen Kohlenwasserstoff; ungesättigten linearen, synthetischen Kohlenwasserstoff; aromatischen Kohlenwasserstoff wie synthetischen, aromatischen Kohlenwasserstoff; chlorierten linearen Kohlenwasserstoff; chlorierten aromatischen Kohlenwasserstoff; chlorfluorierten linearen Kohlenwasserstoff; ethylenischen, aromatischen Kohlenwasserstoff; chloriertes Lösungsmittel; oxygeniertes Lösungsmittel wie Alkohol, Keton, Glycolether und Etheroxid; Alkylphosphat; Alkylchlorid und flüssiges Silikon.

7. Verfahren nach einem der Ansprüche 1 bis 6, **dadurch gekennzeichnet, dass** die organische Flüssigkeit zumindest ein Element ist oder enthält, ausgewählt aus der Gruppe umfassend handelsübliche Szintillationsflüssigkeit, Motoröl, Transformatoröl, Benzol, Alkylbenzol, Alkylnaphthalin, Alkylbiphenyl, Toluol, Xylol, Ethylenbenzol, Kerosin, Hexan, Cyclohexan, Octan, Ethylcyclohexan, Dodecan, Eicosan, Phenol, Dichlormethan, Trichlorethan, Dichlorbenzol, Trichlorethylen, Perchlorethylen, Trichlorbenzol, Polychlorbiphenyl, Trichlortrifluorethan, Alkyldiarylethylen, 2-Octanon, 4-Dodecanon, Tributylphosphat (TBP), Tetrahydrofuran (THF), Diethylether, Polydimethylsiloxan und Polydiphenylsiloxan.

8. Verfahren nach einem der Ansprüche 1 bis 7, **dadurch gekennzeichnet, dass** der Aktivierungslösung in dem Unterschritt (b) neben der Aluminosilikatquelle Sand, ein Granulat und/oder Feinstoffe hinzugefügt wird/werden.

9. Verfahren nach einem der vorangehenden Ansprüche, **dadurch gekennzeichnet, dass** die Wärmebehandlung darin besteht, das Verbundmaterial aus Schritt (1) einer Temperatur von über 200 °C, insbesondere zwischen 300 °C und 1000 °C, insbesondere zwischen 400 °C und 800 °C, zu unterwerfen.

10. Verfahren nach einem der Ansprüche 1 bis 8, **dadurch gekennzeichnet, dass** die Oxidationsbehandlung entweder eine Plasmabehandlung oder eine Ozonbehandlung ist.

11. Verfahren nach einem der Ansprüche 1 bis 8, **dadurch gekennzeichnet, dass** die superkritische Flüssigkeit ausgewählt ist aus der Gruppe umfassend superkritisches Kohlendioxid (CO₂), superkritisches Stickstoffmonoxid (N₂O), superkritisches Freon-22, superkritisches Freon-23, superkritisches Methanol, superkritisches Hexan und superkritisches Wasser.

## Claims

1. A method for preparing a macroporous and mesoporous geopolymer comprising the successive steps consisting of:
1) preparing a composite material comprising a geopolymer matrix and an organic liquid; and then
2) removing said organic liquid by a treatment selected from the group consisting of a heat treatment, oxidation treatment, photodegradation treatment and an extraction via a supercritical fluid or ultrasounds,
**characterized in that** said step (1) comprises the following sub-steps:
a) preparing an activation solution comprising said organic liquid, surfactant(s) having been added to said organic liquid prior to its addition in said activation solution,
b) adding to the solution obtained in step (a) at least one alumino-silicate source,
c) subjecting the mixture obtained in step (b) to conditions allowing hardening of the geopolymer.

2. The method according to claim 1, **characterized in that** the composite material prepared during said step (1) appears as a geopolymer (or a geopolymeric matrix) in which beads of organic liquid and notably microbeads and/or nanobeads of organic liquid are coated.

3. The method according to claim 1 or 2, **characterized in that** said organic liquid comprises at most 50%, notably at most 40%, in particular at most 30%, more particularly at most 20% and most particularly at most 10% of triglycerides by mass based on the total dry mass of said organic liquid.

4. The method according to any of claims 1 to 3, **characterized in that** said organic liquid is an unsaponifiable organic liquid.

5. The method according to any of claims 1 to 4, **characterized in that** said organic liquid is or comprises a thermally insulating oil.

6. The method according to any of claims 1 to 5, **characterized in that** said organic liquid is or comprises at least one element selected from the group consisting of a naphthenic oil; an aliphatic hydrocarbon; an unsaturated linear synthetic hydrocarbon; an aromatic hydrocarbon such as an aromatic synthetic hydrocarbon; a chlorinated linear hydrocarbon; a chlorinated aromatic hydrocarbon; a chlorinated-fluorinated linear hydrocarbon; an ethylenic aromatic hydrocarbon; a chlorinated solvent; an oxygenated solvent such as an alcohol, a ketone, a glycol ether and an ether oxide; an alkyl phosphate; an alkyl chloride and a liquid silicone.

7. The method according to any of claims 1 to 6, **characterized in that** said organic liquid is or comprises at least one element selected from the group consisting of commercial scintillator liquid, motor oil, oil for transformers, benzene, alkylbenzene, alkylnaphthalene, alkylbiphenyl, toluene, xylene, ethylbenzene, kerosene, hexane, cyclohexane, octane, ethylcyclohexane, dodecane, eicosane, phenol, dichloromethane, trichloroethane, dichlorobenzene, trichloroethylene, perchlorethylene, trichlorobenzene, polychlorobiphenyl, trichloro-trifluoroethane, alkyldiarylethylene, 2-octanone, 4-dodecanone, tributyl phosphate (TBP), tetrahydrofuran (THF), diethyl ether, polydimethylsiloxane and polydiphenylsiloxane.

8. The method according to any of claims 1 to 7, **characterized in that**, in addition to the alumino-silicate source, sand, granulate and/or fines are added to the activation solution during said sub-step (b).

9. The method according to any of the preceding claims, **characterized in that** said heat treatment consists of subjecting the composite material of step (1) to a temperature above 200°C, notably comprised between 300°C and 1,000°C, and in particular comprised between 400°C and 800°C.

10. The method according to any of claims 1 to 8, **characterized in that** said oxidation treatment is either a plasma treatment or an ozone treatment.

11. The method according to any of claims 1 to 8, **characterized in that** said supercritical fluid is selected from the group consisting of supercritical carbon dioxide (CO₂), supercritical nitrogen monoxide (N₂O), supercritical Freon-22, supercritical Freon-23, supercritical methanol, supercritical hexane and supercritical water.
